# EUROPEAN PATENT SPECIFICATION

(11) **EP 2 778 307 B1**
(45) Date of publication and mention of the grant of the patent: **22.09.2021**
(21) Application number: 14158563.8
(22) Date of filing: 10.03.2014
(51) Int. Cl.: E03F 5/14, E03F 5/04

(54) **Drain channel comprising a strainer**
Ablaufrinne mit Sieb
Caniveau comprenant un tamis

(30) Priority: 11.03.2013 DK 201370140
(43) Date of publication of application: 17.09.2014
(73) Proprietor: Blücher Metal A/S, 7480 Vildbjerg (DK)
(72) Inventor: Johansen, Per Thanning, 8600 Silkeborg (DK)
(74) Representative: Patrade A/S

(56) References cited:
- WO-A1-97/16609
- WO-A1-2011/134027
- DE-A1- 19 622 021
- DE-A1-102007 033 824
- JP-A- 2006 342 589
- US-A1- 2013 056 399
- None

## Description

### Scope of the Invention

The present invention concerns a combination of a drain channel and a strainer for disposition in such a drain channel.

More specific the invention relates to a combination of a drain channel and one or more strainers, which strainer or strainers is adapted for disposition in the drain channel, and where the drain channel is coverable by one or more grating covers, and where the drain channel in its longitudinal direction is adapted to conduct drain water towards a drain as the bottom of the drain channel has a downward slope towards the drain, where the strainer is designed as an oblong unit with perforations, the unit extending in longitudinal direction of the drain channel, that the strainer has an edge extending in longitudinal direction of the strainer, that the edge is designed such that the strainer can rest on the upper edge of the drain channel, whereby drain water passes through the strainer on its way towards the bottom of the drain channel, and whereby the strainer sifts the drain water, thereby collecting objects larger than the perforations of the strainer.

### Background of the Invention

In connection with floor drains, e.g. in connection with wet rooms in production areas of slaughterhouses or similar, oblong drain channels (also called hygiene drains) may be provided in the floor with a slope whereby excessive drain water is conducted to a drain via the drain channels. Typically, oblong drain channels will thus be provided in the floor with the task of conducting drain water to one or more drains placed at strategic points in the production area. Wet rooms with such drain channels are e.g. frequently used in connection with breweries and slaughterhouses where the drain channels are cast into epoxy floors, and in places with heavy emphasis on optimal hygiene. Alternatively, the floors can be mounted tile floors.

Typically, water is used in the wet room for cleaning, producing or other activities, and the water will thereby be dirty and therefore also contain large or small dirt elements. These can e.g. be residue from slaughtering in connection with a slaughterhouse.

In order to ensure that these slaughter elements are not flushed out in the drain, a grating is placed over the drain for filtering the dirty drain water, thereby ensuring that only impurities under a given size get through the drain grating and through the drain. One problem is that over a period of time, dirt will accumulate over this grating, entailing that this grating has to be cleaned at relatively short intervals due to low capacity. Cleaning of the grating entails that this drain cannot be used for this period of time, which may delay the production. Furthermore, it is time-consuming if one is to clean these drain gratings regularly and relatively often in order to avoid clogging of the drain.

It is known from WO 2007004793 to place a strainer in a road cesspool, where inlet of the road cesspool is covered by a grating cover. The cesspool can be said to constitute a drain bowl covered by the grating cover, and where the drain of the cesspool is covered by the strainer. Objects passing through the grating cover and down into the road cesspool may hereby be collected in the strainer such that these objects are not brought with the drain water out through the drain. By the described combination of a road cesspool and a strainer, the strainer will cover the outlet of the drain bowl. However, a drain bowl of the described type will be insufficient in wet rooms where large amounts of drain water appear. A strainer disposed over the drain will be clogged very quickly.

It is known from JP 2006342589 to place a filter cloth under a grating cover in a drain channel. However, a construction of this type will be unsuitable in wet rooms where large amounts of drain water appear. A filter cloth provided in the opening of the drain bowl will impede the flow of drain water, and the filter cloth of the drain channel will be blocked very quickly.

DE 19822021 A discloses a drainage channel with a grating covering the longitudinal opening in the channel. There is no strainer means provided in the drain channel.

WO97/16609 A, US2013/0056399 A1, and WO 2011/134027 A all disclose vertical drains in which a strainer is mounted over the opening of the vertical drain.

In DE 102007 033824 A a drainage channel is provided with a strainer mounted in the outlet of the drainage channel, i.e. in the vertical outlet.

Drain channels where the inlet is covered by a grating cover and where the outlet of the drain channel is covered by a grating cover where the drain water is filtered have been proposed. However, it has appeared that this grating cover is blocked very quickly. Since the grating cover is placed at the outlet of the drain channel, it is difficult to clean.

### Object of the Invention

An object of the invention is to solve the above problems, including to solve the problem of repeated cleaning of gratings provided over drains in relation to drain channels.

### Description of the Invention

According to the present invention, this is achieved by a combination of a drain channel and one or more strainers according to claim 1.

Thereby it is avoided that drain water is first filtrated at the drain grating itself, instead the strainers in the drain channels will provide that the drain water is sifted along the entire length of the drain channel, and a distribution of impurities is achieved in the strainers instead of gathering them all at the drain grating. This entails that cleaning of the drain grating does not have to be performed so often.

Handles are provided on the strainer by which it can be lifted up from the drain channel with the object of cleaning or replacement.

The strainer is made up of a bent stainless steel plate with perforations in the form of round holes. This is a particularly production-friendly way of making a strainer, and at the same time it is relatively easy to use plates with other hole sizes with corresponding production methods, and thereby achieve different strainers. Metal sheets with holes are already mass-produced for various purposes, and such can just be bent and used as strainers.

Stainless steel is particularly suitable in connection with drains with respect to durability as well as hygiene.

The handles are bent flaps, which may be upwardly bent flaps cut in the end faces of the strainer and bent up. This will ensure that material that is already part of the strainer is utilised, and therefore there is no need for adding further to the strainer.

The edge of the strainer can rest on the upper edge of the drain channel right under the cover grating of the drain channel. It is ensured thereby that the strainer is easily accessible for cleaning, and it is furthermore ensured that the strainer can have the greatest possible depth and still fit into the drain channel without the bottom of the strainer resting on the bottom of the drain channel.

In an embodiment, the strainer has a length which is not greater than the length of the cover grating of the drain channel. A strainer can thereby be removed and cleaned just by removing a single grating cover over the strainer. The length of the grating cover can e.g. be 500 mm, and in this case the strainer could have a length of 495 mm.

In an embodiment, the outer height of the strainer is not greater than the least depth of the drain channel. The drain channel has varying depth in order to ensure the slope towards the drain, and by ensuring that the height of the strainer is not greater than the least depth of the drain channel, strainers with the same dimensions can be disposed along the entire drain channel. Thus there is no need for specific strainers for specific positions at the drain channel.

In an embodiment, the number of perforations in the strainer is adapted to the drain water to be sifted. The strainer is thereby adapted to the size of the objects that are to be sifted from the drain water.

In an embodiment, the distribution of perforations in the strainer is adapted to the drain water to be sifted. This is for adapting the strainer to the size of the objects to be sifted, but also for adjusting the flow of he drain water; more holes and their distribution influence the amount and the speed of drain water that may pass through the strainer.

### Short Description of the Drawing

The invention will be explained in more detail below with reference to the accompanying drawing, where:
Figs. 1A-C show schematic drawings of a strainer according to the invention; and
Figs. 2A-D show an embodiment of a strainer viewed from various angles.

### Detailed Description of Embodiments of the Invention

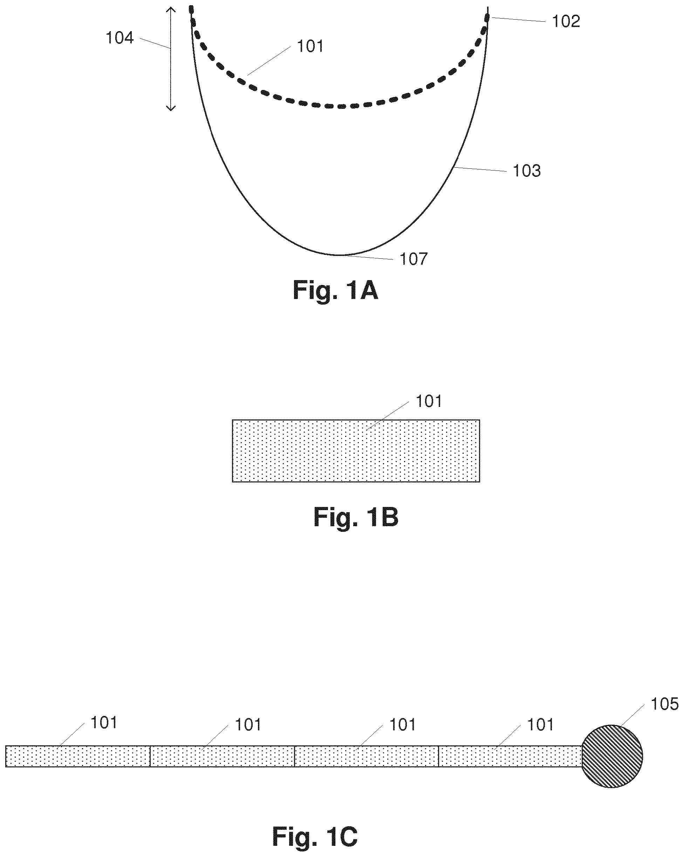

With the intention of explaining the principle behind the invention, Figs. 1A-D show schematic drawings of a strainer 101 alone and together with a drain channel 103 and a drain 105, respectively.

Fig. 1A shows a schematic drawing of a cross-section of a drain channel 103 in which is disposed a strainer 101. The strainer rests at the top in the drain channel 103. When drain water runs down against the bottom 107 of the drain channel 103, it is sifted through the perforations of the strainer. The strainer 101 is disposed in the drain channel 103 such that the strainer 101 lies down in the drain channel 103 and does not protrude over the drain channel 103. This is effected in that the upper edge of the strainer rests on the inner side of the upper edge of the drain channel as illustrated by 102, whereby the strainer 101 can rest immediately under a grating (not shown) disposed over the drain channel 103. It is ensured thereby that the strainer 101 is below the level of the drain channel, and in addition it is ensured that the strainer 101 does not rest on the bottom 107 of the drain channel 103. The strainer has a height 104 adapted such that the strainer 101 correspondingly fits the lowermost end of the drain channel 103. The strainer 101 is designed as a basket whereby it can collect objects from the drain water, and this collecting and storing until cleaning of the strainer can occur under the grating on the drain channel 103.

Fig. 1B shows a schematic drawing of a strainer 101 as seen from above. It appears from this that the strainer 101 has a perforated surface, and by disposition over a drain channel 103 it will thereby form a perforated surface over the drain channel 103 whereby drain water passes through this perforated surface until it reaches the bottom 107 of the drain channel and is conducted to the drain 105. The strainer can be made of a bent sheet with perforations in the form of holes, and the size and distribution of the latter influence the function of the strainer and may be individually adapted to the application of the strainer and to the drain water to be sifted by the strainer. Typically, it is interesting to have a large perforation (clearance) such that the strainer can handle large amounts of drain water without being clogged.

Fig. 1C shows a schematic drawing of a drain channel system with strainers wherein a drain channel run 109 leads towards a drain 105, and wherein a slope of the bottom of the drain channel 105 ensures that drain water is conducted towards the drain 105. Several strainers 101 are provided as modules in the drain channel 103, and irrespectively where along the drain channel 103 the drain water is to go down into the drain channel 103, the drain water will be sifted off by one of the strainers 101. In addition, drain gratings (not illustrated) will typically be placed over the drain channel 103.

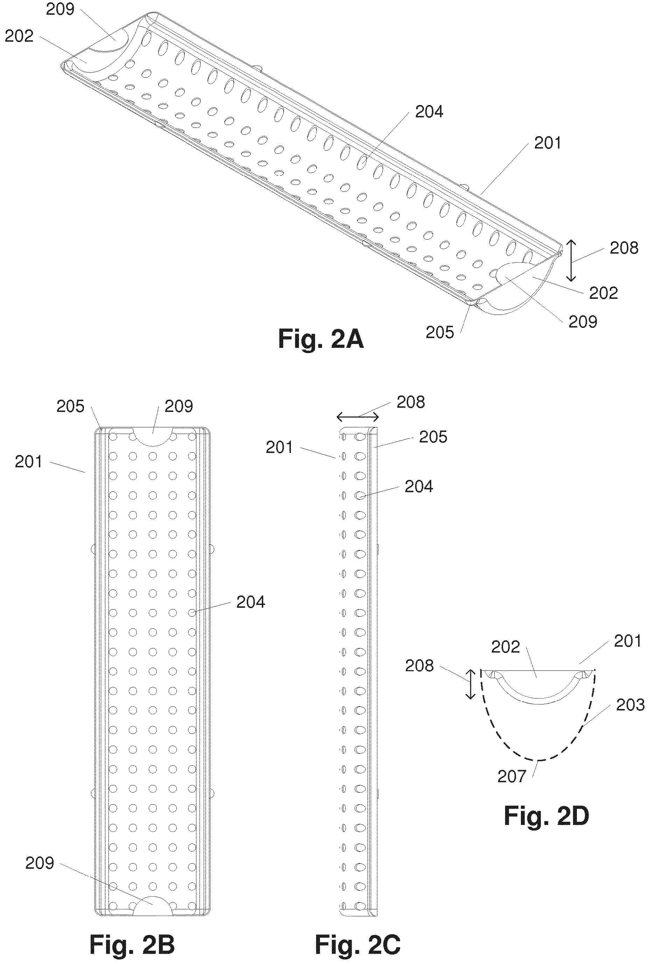

On Fig. 2A-D there is shown an embodiment of a strainer viewed from various angles where 2A is a view obliquely from above, 2B is a view from above, 2C is a view from the side, and 2D is a cross-section where also the drain channel 203 and its bottom 207 are indicated by broken lines. Here is seen the strainer 201 which is a bent plate with perforations in the form of round holes 204. The strainer further has an edge 205 which is designed with the object of resting on the inner side of the upper edge of the drain channel (see Fig. 2D). By this embodiment, there are handles 209 at the ends of the strainer 201 in the form of bent flaps, for example cut out and bent up from the end part 202 of the strainer 201. By using the handles the strainer 201 can relatively easily be lifted up with the object of emptying and/or cleaning. The height or depth of the strainer is illustrated by 208.

The strainer can be made of steel, but other materials like plastic can be used as well. Several segments of grating are placed over the drain channel, and the strainers have a length which is shorter than the grating segments whereby the strainer can be lifted up when the grating above it is removed.

The invention is not limited to the embodiments shown in the Figures and described above. Other embodiments with other shapes of the strainer may be envisaged within the scope of this invention and the subsequent claims.

## Claims

1. A combination of a drain channel (103, 203) and one or more strainers (101, 201), which strainer or strainers (101, 201) is adapted for disposition in the drain channel (103, 203), and where the drain channel (103, 203) is covered by one or more grating covers, and where the drain channel (103, 203) in its longitudinal direction is adapted to conduct drain water towards a drain (105) as the bottom (107, 207) of the drain channel (103, 203) has a downward slope towards the drain (105), where the strainer or strainers (101, 201) is designed as an oblong unit with perforations (204), the unit extending in longitudinal direction of the drain channel (103, 203), wherein the strainer (201) has an edge (205) extending in longitudinal direction of the strainer, wherein the edge (205) is designed such that the strainer (201) can rest on the upper edge of the drain channel (103, 203), whereby drain water passes through the strainer or strainers (101, 201) on its way towards the bottom (107, 207) of the drain channel (103, 203), and whereby the strainer or strainers (101, 201) sifts the drain water, thereby collecting objects larger than the perforations (204) of the strainer (101, 201), **characterised in that** handles (209) are provided on the strainer (201), that the strainer or strainers (101, 201) is made up of a bent stainless steel plate with perforations in the form of round holes (204) and that the handles (209) are bent flaps.

2. Combination according to claim 1, **characterised in that** the strainer (201) rests on the upper edge of the drain channel immediately under the grating cover of the drain channel.

3. Combination according to claim 1 or 2, **characterised in that** the strainer (201) has a length which is not greater than the length of the grating cover of the drain channel.

4. Combination according to any of claims 1-3, **characterised in that** the outer height (208) of the strainer is not greater than the least depth of the drain channel.

5. Combination according to any of claims 1-4, **characterised in that** the number of perforations (204) in the strainer is adapted to the drain water to be sifted.

6. Combination according to any of claims 1-5, **characterised in that** the distribution of perforations (204) in the strainer is adapted to the drain water to be sifted.

## Patentansprüche

1. Kombination aus einer Ablaufrinne (103, 203) und einem oder mehreren Sieben (101, 201), wobei das Sieb oder die Siebe (101, 201) zur Anordnung in der Ablaufrinne (103, 203) ausgebildet sind und wobei die Ablaufrinne (103, 203) durch eine oder mehrere Gitterabdeckungen abgedeckt ist und wobei die Ablaufrinne (103, 203) in ihrer Längsrichtung dazu ausgebildet ist, Ablaufwasser in Richtung eines Ablaufs (105) zu leiten, da die Unterseite (107, 207) der Ablaufrinne (103, 203) ein Abwärtsgefälle in Richtung des Ablaufs (105) aufweist, wobei das Sieb oder die Siebe (101, 201) als längliche Einheit mit Perforationen (204) gestaltet sind, wobei die Einheit sich in Längsrichtung der Ablaufrinne (103, 203) erstreckt, wobei das Sieb (201) eine Kante (205) aufweist, die sich in Längsrichtung des Siebs erstreckt, wobei die Kante (205) derart gestaltet ist, dass das Sieb (201) auf der oberen Kante der Ablaufrinne (103, 203) aufliegen kann, wodurch Ablaufwasser auf seinem Weg in Richtung der Unterseite (107, 207) der Ablaufrinne (103, 203) durch das Sieb oder die Siebe (101, 201) läuft und wodurch das Sieb oder die Siebe (101, 201) das Ablaufwasser sieben, wodurch Objekte, die größer als die Perforationen (204) des Siebs (101, 201) sind, aufgefangen werden, **dadurch gekennzeichnet, dass** Griffe (209) an dem Sieb (201) bereitgestellt sind, dass das Sieb oder die Siebe (101, 201) aus einer gebogenen Edelstahlplatte mit Perforationen in Form von runden Löchern (204) bestehen und dass die Griffe (209) gebogene Laschen sind.

2. Kombination nach Anspruch 1, **dadurch gekennzeichnet, dass** das Sieb (201) auf der oberen Kante der Ablaufrinne unmittelbar unter der Gitterabdeckung der Ablaufrinne aufliegt.

3. Kombination nach Anspruch 1 oder 2, **dadurch gekennzeichnet, dass** das Sieb (201) eine Länge aufweist, die nicht größer als die Länge der Gitterabdeckung der Ablaufrinne ist.

4. Kombination nach einem der Ansprüche 1-3, **dadurch gekennzeichnet, dass** die Außenhöhe (208) des Siebs nicht größer als die geringste Tiefe der Ablaufrinne ist.

5. Kombination nach einem der Ansprüche 1-4, **dadurch gekennzeichnet, dass** die Anzahl von Perforationen (204) in dem Sieb an das zu siebende Ablaufwasser angepasst ist.

6. Kombination nach einem der Ansprüche 1-5, **dadurch gekennzeichnet, dass** die Verteilung von Perforationen (204) in dem Sieb an das zu siebende Ablaufwasser angepasst ist.

## Revendications

1. Combinaison d'un caniveau (103, 203) et d'une ou plusieurs grilles (101, 201), laquelle grille ou lesquelles grilles (101, 201) sont conçues pour être disposées dans le caniveau (103, 203), et où le caniveau (103, 203) est recouvert d'un ou plusieurs couvercles en treillis, et où le caniveau (103, 203) dans sa direction longitudinale est conçu pour conduire de l'eau d'évacuation vers une évacuation (105) étant donné que le fond (107, 207) du caniveau (103, 203) présente une inclinaison descendante vers l'évacuation (105), où la grille ou les grilles (101, 201) sont conçues sous forme d'une unité oblongue avec des perforations (204), l'unité s'étendant dans la direction longitudinale du caniveau (103, 203), dans laquelle la grille (201) présente un bord (205) s'étendant dans la direction longitudinale de la grille,
dans laquelle, le bord (205) est conçu de sorte que la grille (201) puisse reposer sur le bord supérieur du caniveau (103, 203), moyennant quoi de l'eau d'évacuation passe à travers la grille ou les grilles (101, 201) sur son parcours menant au fond (107, 207) du caniveau (103, 203), et moyennant quoi la grille ou les grilles (101, 201) passent au crible l'eau d'évacuation, récupérant ainsi des objets plus grands que les perforations (204) de la grille (101, 201), **caractérisée en ce que** des poignées (209) sont fournies sur la grille (201), **en ce que** la grille ou les grilles (101, 201) sont composées d'une plaque en acier inoxydable courbée avec des perforations sous forme de trous circulaires (204) et **en ce que** les poignées (209) sont des pattes courbées.

2. Combinaison selon la revendication 1, **caractérisée en ce que** la grille (201) repose sur le bord supérieur du caniveau immédiatement sous le couvercle en treillis du caniveau.

3. Combinaison selon la revendication 1 ou 2, **caractérisée en ce que** la grille (201) présente une longueur qui n'est pas supérieure à la longueur du couvercle en treillis du caniveau.

4. Combinaison selon l'une quelconque des revendications 1 à 3, **caractérisée en ce que** la hauteur externe (208) de la grille n'est pas supérieure à la profondeur minimale du caniveau.

5. Combinaison selon l'une quelconque des revendications 1 à 4, **caractérisée en ce que** le nombre de perforations (204) dans la grille est conçu pour que l'eau d'évacuation soit passée au crible.

6. Combinaison selon l'une quelconque des revendications 1 à 5, **caractérisée en ce que** la distribution de perforations (204) dans la grille est conçue pour que l'eau d'évacuation soit passée au crible.
